(19) Europäisches Patentamt
European Patent Office
Office européen des brevets

(11) Publication number: **0 200 537 A2**

# (12) EUROPEAN PATENT APPLICATION

(21) Application number: 86303263.7

(22) Date of filing: 29.04.86

(51) Int. Cl.[4]: H 02 K 29/14

(30) Priority: 30.04.85 JP 93022/85
25.06.85 JP 139339/85

(43) Date of publication of application: 05.11.86 Bulletin 86/45

(84) Designated Contracting States: DE FR GB

(71) Applicant: Matsushita Electric Industrial Co., Ltd.
1006, Oaza Kadoma
Kadoma-shi Osaka-fu, 571(JP)

(72) Inventor: Kataoka, Jiro
3-25, Midoridai 5-chome
Kawanishi-shi Hyogo-ken(JP)

(74) Representative: Barlow, Roy James et al,
J.A.KEMP & CO. 14, South Square Gray's Inn
London WC1R 5EU(GB)

## (54) Electrical motor with improved tachometer generator.

(57) In an electrical motor having a tachometer generator arranged to product an output signal indicative of the rotational speed of the motor by detecting the movement of magnets or magnetized portions, convex and concave portions (13a, 13b) are successively and alternately formed in a rotor magnet (13). A wave-like conductor pattern (11a) is arranged to oppose the convex and concave portions (13a, 13b) to induce a voltage when the rotor magnet (13) rotates. The convex and concave portions (13a, 13b) in each of N and S poles alternately arranged circumferentially have a phase which is shifted by a half cycle in circumferential direction from the phase of adjacent poles. In one embodiment, a radial groove (14) is made in the rotor magnet (13) while a corresponding conductor pattern (11b) is provided to oppose the groove (14) so as to detect origin of rotation. The rotor magnet may be flat or cylindrical. In the case of using a cylindrical rotor magnet, the wave-like conductor pattern (106a) is made on a flexible printed circuit board (106) which is cylindrically curved.

FIG. 1

13b
13
2
3
4
11
5
6
7
8

EP 0 200 537 A2

Croydon Printing Company Ltd.

0200537

## TITLE OF THE INVENTION

ELECTRICAL MOTOR WITH IMPROVED TACHOMETER GENERATOR

## BACKGROUND OF THE INVENTION

1. Field of the Invention

This invention relates generally to electrical motors with tachometer generator or dynamo used for detecting the rotational speed of the motor, and particularly to such an electrical motor used in a tape recorder, floppy disc drive or the like.

2. Description of Prior Art

Various electrical apparatus, such as tape recorders, video tape recorders or the like, are recently required to be small in size to be portable. In such apparatus, electrical motors are used as a tape-driving power source, and it is desired to develop a thin and small-sized motors as to facilitate the miniatualization of such apparatus.

However, in conventional small-sized electrical motors, magnetic flux from additionally magnetized areas, provided for the purpose of detection of rotational speed, of a rotor magnet does not contribute to the generation of the rotational torque. As a result, larger diameter of the rotor is required to ensure sufficient rotational torque. Furthermore, in another conventional motor having no magnets used for rotational speed detection, additional separate magnets are required for the speed detection.

SUMMARY OF THE INVENTION

The present invention has been developed in order to remove the above-described drawbacks inherent in the conventional motors with tachometer generator of the type arranged to produce a voltage by electromagnetically detecting the movement of a rotor.

It is, therefore, an object of the present invention to provide a new and useful electrical motor with an improved tachometer generator so that small-sized motor is actualized wthout reducing generating torque.

According to a feature of the present invention convex and concave portions are successively and alternately formed in a rotor magnet of an electrical motor for causing an associated wave-like conductor pattern to generate a voltage indicative of the rotational speed of the rotor magnet. The wave-like conductor pattern is positioned to oppose the convex and concave portions to induce the above-mentioned voltage when the rotor magnet rotates. The convex and concave portions in each of N and S poles alternately arranged circumferentially in the rotor magnet have a phase which is shifted by half cycle in circumferencial direction from the phase of adjacent pole. With this structure, there is an occation that convex portions of N poles of the rotor magnet face convex portions of the wave-like conductor pattern and another occation that convex portions of S poles of the rotor magnet face convex portions of the wave-like conductor pattern when the rotor magnet rotates by half cycle of the wave-like conductor pattern from the former occation. As a result, magnetic flux interlinking the conductor pattern changes to induce a voltage whose frequency is proportional to the rotational speed of the rotor magnet.

Since the step between the convex portions and the concave portions can be reduced to a very small value comapred to substantial air gap including the thickness of a drive coil, main magnetic flux from the rotor magnet is effectively prevented from being reduced. Thus torque generation is not substatially affected while small-sized motor can be provided because no additional magnets or magnetized portions are required.

In one embodiment, a radial groove or slit is made in the rotor magnet while a corresponding conductor pattern is provided to oppose the groove so as to detect origin of rotation. The rotor magnet may be flat or cylindrical. In the case of using a cylindrical rotor magnet, the wave-like conductor pattern is made on a flexible printed circuit board which is cylindrically curved.

In accordance with the present invention there is provided an elecrtrical motor comprising: a rotor magnet rotatably supported and having a plurality of N and S poles alternately arranged circumferentially, each of said N and S poles having a plurality of convex and concave portions successively and alternately arranged, said convex and concave portions in each of said poles have a phase which is shifted by half cycle in circumferencial direction from the phase of convex and concave portions of adjacent poles; a stator coil secured to oppose said rotor magnet; and a wave-like conductor pattern secured so as to oppose said convex and concave portions of said rotor magnet, the length of one cycle in said wave-like conductor pattern equals the length of one cycle of said convex and concave portions.

BRIEF DESCRIPTION OF THE DRAWINGS

The object and features of the present invention will become more readily apparent from the following detailed description of the preferred embodiments taken in conjunction with the accompanying drawings in which:

Fig. 1 is a schematic cross-sectional view of an embodiment of a flat motor according to the present invention;

Fig. 2 is a top plan view of a printed circuit board used in the motor of Fig. 1, showing a conductor pattern formed on the printed circuit board;

Fig. 3 is a perspective view showing a rotor magnet used in the motor of Fig. 1;

Figs. 4A and 4B and Figs. 5A, 5B, 5C and 5D are diagrams useful for describing the operation of the motor of Fig. 1;

Figs. 6 and 7 are perspective views showing rotor magnets used in another embodiments of the present invention;

Fig. 8 is a schematic cross-sectional view of another embodiment of a flat motor according to the present invention;

Fig. 9 is a perspective view showing a flexible printed circuit board used in the embodiment of Fig. 8;

Fig. 10 is a schematic cross-sectional view of another embodiment of a flat motor according to the present invention;

Fig. 11 is a perspective view showing a rotor magnet used in the embodiment of Fig. 10;

Fig. 12 is a perspective view showing a flexible printed circuit board used in the embodiment of Fig. 10;

Fig. 13 is a cross-sectional view showing a conventional flat motor;

Fig. 14 is a diagram showing the magnetizing state of a rotor magnet used in the conventional motor of Fig. 13;

Fig. 15 is a top plan view showing a conductive pattern used for the detection of rotational speed in the conventional motor of Fig. 13;

Fig. 16 is a diagram showing the variation of flux which interlinks the conductive pattern of Fig. 15; and

Fig. 17 is a cross-sectional view showing another conventional flat motor.

The same or corresponding elements and parts are designated at like reference numerals throughout the drawings.

## DETAILED DESCRIPTION OF THE INVENTION

Prior to describing preferred embodiments of the present invention, the above-mentioned conventional motors will be described for a better understanding of the present invention.

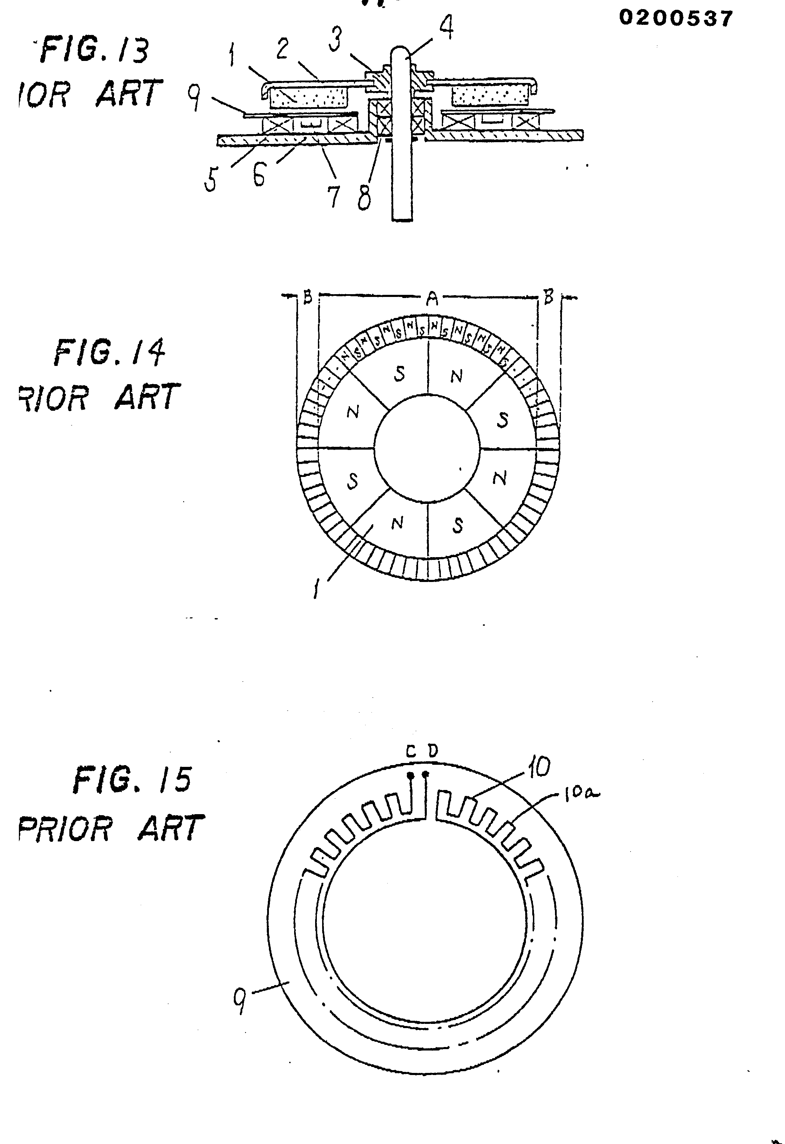

Fig. 13 is a schematic cross-sectional view of a conventional flat motor.- A rotor magnet 1 is attached to a rotor yoke having a rotor boss 3 at its center. A shaft 4 is inserted into a through hole of the rotor boss 3. On a stator yoke 6 is provided a stator coil 5 made of a self welding wire or the like to have a shape suitable for the shape of poles of the rotor magnet 1. The sator yoke 6 has a bearing 8 at its center such that the shaft 4 is rotatably supported by the bearing 8. A printed circuit board 9 is adhered to the stator coil 6 so that it is interposed between the rotor magnet 1 and the stator coil 5. Phase-switching sensors such as a Hall generators 7 are attached to the lower surface of the printed circuit board 9 in the drawing.

This printed circuit board 9 forms a circuit for detecting the rotational speed of the rotor magnet 1, and comprises a thin and flexible printed circuit board formed using a film base so that an air gap between the rotor magnet 1 and the stator coil 5 is as small as possible. On the surface of the printed circuit bord 7 is formed a conductor pattern for soldering the Hall generators 7.

Although a motor drive circuit is necessary for driving the motor, the structure of such drive circuit is not described for simplicity.

Fig. 14 shows a magnetizing pattern on the rotor magnet 1 of Fig. 13. An area designated at the reference A is used for main magnetic flux and a peripheral area B is used as a magnetizing portion for the detection of rotational speed. In flat motors whose diameter is between 40 and 100 millimeters or so, radial length of the magnetizing portion B is usually 2 or 3 millimeters. In the illustrated example, the main magnetic flux portion A has 8 poles, while the area B used for rotational speed detection has 64 poles. The following description will be made using the combination of such number of poles.

Fig. 15 shows a conductor pattern made on the printed cricuit board 9 which conductor pattern is used for the detection of rotational speed. The conductor pattern 10 is made of copper wire or the like, and has a repetitive wave-like pattern to form a circle. The pitch or length of each wave of the pattern corresponds to the length of 1 cycle of the magnetizing portion B on the rotor magnet 1, and the number of projecting or convex portions 10a in the pattern 10 is 32 which is one-half the number of poles in the magnetizing portion B.

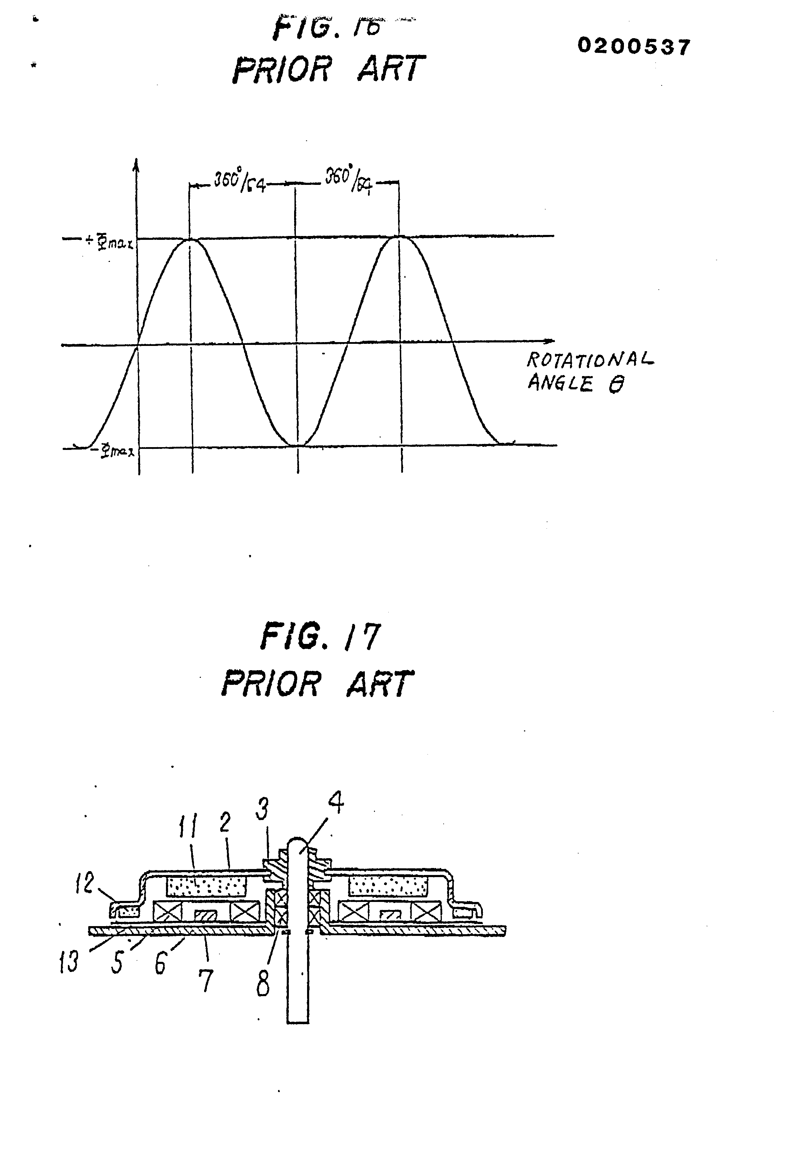

The conventional flat motor of Figs. 13 to 15 operates as follows. When the projecting portions 10a are located so as to face N poles of the magnetizing portion B of the rotor magnet 1, positive interlinkage flux $+\phi_{max}$ interlinks the conductor pattern 10. On the other hand, when the projecting portions 10a are located so as to face S poles of the magnetizing portion B, nagative interlinkage flux $-\phi_{max}$ interlinks the conductor pattern 10. This is shown in Fig. 16. As is apparent from Fig. 16 each time the rotor magnet 1 rotates 360/64 degrees, the interlinkage flux varies between $+\phi_{max}$ and $-\phi_{max}$. Therefore, when the rotor magnet 12 continuously rotates, a voltage expressed by $e = -d\phi/dt$ is induced across the terminals C and D of the conductor pattern 10. This induced voltage e has a waveform which is similar to sinusoidal wave having a frequency of 32 cycle per revolution. Thus, it is possible to detect the rotational speed of the rotor magnet using this induced voltage.

However, this conventional flat motor suffers from a drawback that the magnetic flux from the magnetizing portion B used for rotational speed detection does not contribute to the generation of rotational torque. Furthermore, when the magnetizing portion B is located at the outer periphery of the rotor magnet, the torque is reduced by 20 percent or so.

Fig. 17 shows another conventional flat motor. In Fig. 17, those parts designated at references 2 through 8 are the same as those in Fig. 13 and thus description thereof is omitted. In Fig. 17, a rotor magnet 11 is attached to a rotor yoke 2, while another annular magnet 12 used for rotational speed detection is attached to the rotor yoke 2 such that the latter magnet 12 surrounds the former magnet 11. This motor of Fig. 17 differs from the motor of Fig. 13 in that the rotor magnet 1 is divided into two parts 11 and 12. Furthermore, a printed circuit board 13 is located between the stator yoke 6 and the stator coil 5. This printed circuit board 13 has a conductor pattern thereon in the same manner as in the above-described conventional arrangement of Fig. 13. This conventional motor operates in the same manner as that of Fig. 13.

As described at the beginning of the specification, this conventional arrangement requires additional magnet for the detection of rotational speed. The use of such additional magnet results in cost increase and in increase in diameter of the entire motor structure.

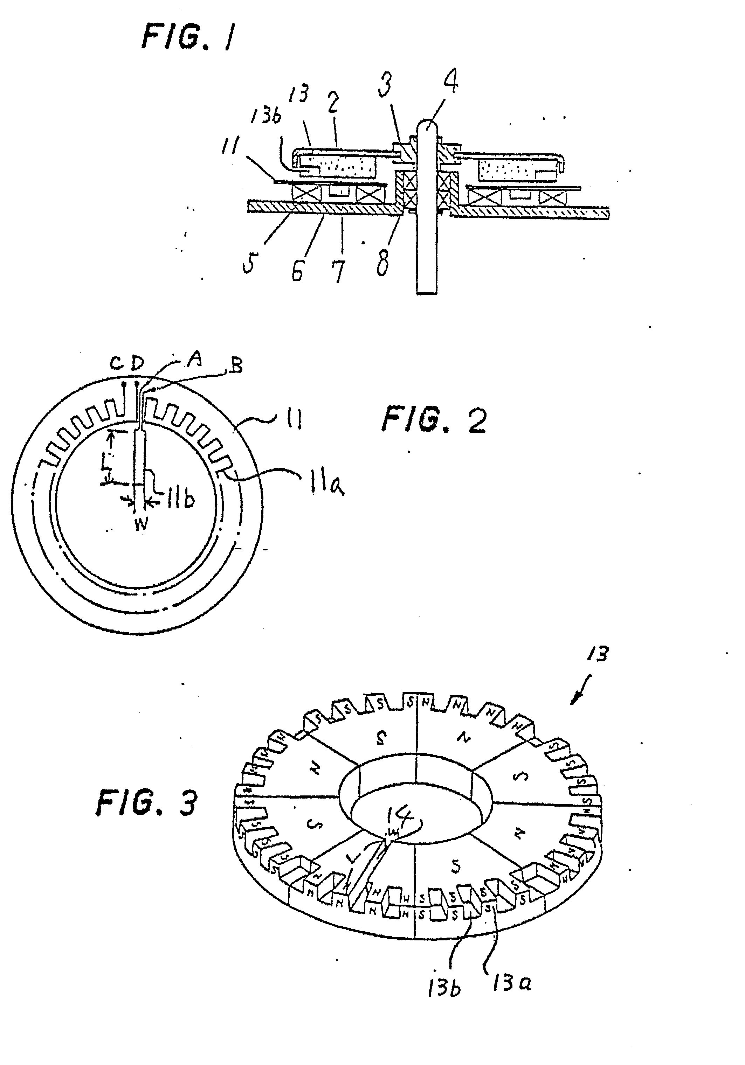

Referring now to Fig. 1, a schematic cross-sectional view of a flat motor is shown as an embodiment of the present invention. In Fig. 1, references 2 to 8 designate the same parts as those used in the conventional arrangement of Fig. 13, and thus further description thereof is omitted. A printed circuit board 11 is provided between the rotor magnet 1 and the coil 5 to have a conductor pattern which is used for generating a voltage to detect rotational speed.

Fig. 2 shows a top plan view of the printed circuit board 11. The conductor pattern comprises a repetitive wave-like pattern 11a and an addtional condutor pattern 11b used for detecting origin of rotation. Both the conductor patterns 11a and 11b are respectively made of a copper wire or the like. More specifically, the conductor pattern 11a having repetitive wave-like pattern forms a circle which is coaxial with the circular printed circuit board 11. In the illustrated embodiment, the wave-like pattern is of rectangular wave. The other conductor pattern 11b used for detecting origin of rotation comprises a one-turn conductor pattern which is generally rectangle and extends radially. Terminals of the one-turn conductor or coil pattern 11b are

desiganted at the references A and B, wile terminals of the conductor pattern 11a are designated at the references C and D.

Fig. 3 shows the rotor magnet 13 used in the motor of Fig. 1. The rotor magnet 13 is generally flat and annular shaped. In detail, convex and concave portions 13a and 13b are successively formed along the entire circumference of the rotor magnet 13 at its one surface. Each convex portion 13a has a width, i.e. circumferential length, which is equal to that of each concave portion 13b. Furthermore, this width equals the width or half pitch of the convex and concave portions of the wave-like conductor pattern 11a. In other words, the length of one cycle in the repetitive pattern of the conductor 11a is equal to the the length of one cycle in the successive convex and concave portions 13a and 13b of the rotor magnet 13.

The rotor magnet 13 comprises a plurality of N pole portions and a plurality of S pole portions so that N and S poles are alternately arranged. The convex portions 13a in each N pole portion are positioned so that they are shifted by half cycle, i.e 180° in electrical angle, from the convex portions 13a in adjacent S poles. Similarly, the concave portions 13b in each N pole portion are positioned so that they are shifted by half cycle from the concave portions 13b in adjacent S poles. As a result, two convex portions or two concave portions are formed at the boundary portion between adjacent N pole and S pole portions. The convex and concave portions 13a and 13b can be readily formed with high accuracy using a metallic mold in the case that the rotor magnet 13 is made through resin-molding.

In this embodiment, the rotor magnet 13 comprises 8 poles and the width or subtending angle of the convex and concave portions 13a and 13b equals $360^{\circ}/64$. Therefore, in the illustrated embodiment, each pole has 4 concave portions and 4 convex portions. However, the sum of the number of convex 13a portions and the number of concave portions 13b per each pole may be either an odd or even number and is not required to be an integer.

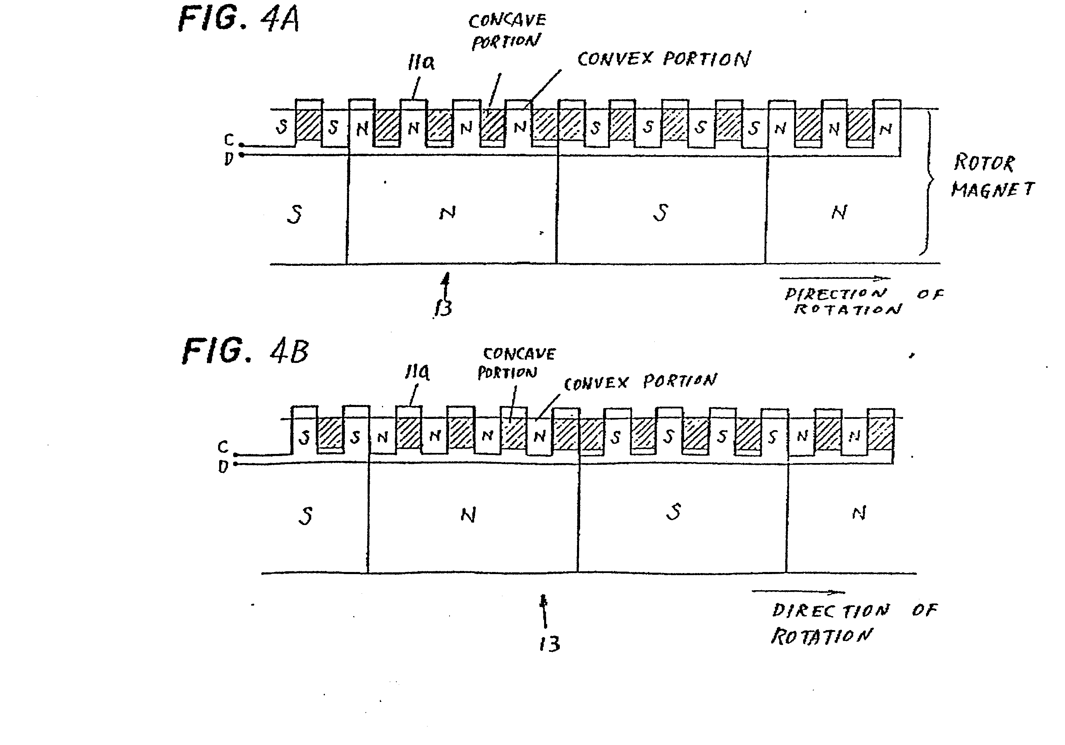

The flat motor of Fig. 1 operates as follows. Figs. 4A and 4B are developed views of the rotor magnet 1 for the description of operation. In Figs. 4A and 4B, the convex portions 13a of the rotor magnet 13 are not hatched while concave portions 13b of the same are hatched, and the conductor pattern 11a on the printed circuit board 11 is shown to be above the convex and concave portions 13a and 13b. More specifically, Fig. 4A shows the convex and concave portions 13a and 13b of the rotor magnet 1 which is positioned so that convex portions 13a of N poles oppose convex portions in the conductor pattern 11a on the printed circuit board 11. In this case, concave portions 13b of S poles oppose convex portions 13b of the conductor pattern 11a. Therefore, the length of the gap between the convex portions 11a of the conductor pattern 11 and the rotor magnet 13 is small at N poles and is large at S poles. As a result, magnetic flux interlinking the conductor pattern 11a is greater at N poles than at S poles.

Fig. 4B shows a state where the rotor magnet 13 has moved or shifted by half cycle of the conductor pattern 11a, i.e. 180$^{\circ}$ in electrical angle, to the right in the drawing. In this state, the convex portions 13a of S poles oppose the convex portions of the conductor pattern 11a, while the concave portions 13b of N poles oppose the convex portions of the conductor pattern 11a. As a result, magnetic flux interlinking the conductor pattern 11a is greater at S poles than at N poles.

With this operation, each time the rotor magnet 13 rotates so that convex and concave portions 13a and 13b thereof move over a distance corresponding to half cycle of the conductor pattern 11a, the polarity of the interlinkage flux changes in the same manner as shown in Fig. 16. As a result, as long as the rotor magnet 13 contiuously rotates an induced voltage waveform can be obtained between the terminals C and D of the conductor pattern 11 such that the number of cycles of the induced voltage is equal to the number of the convex portions 11a of the conductor pattern 11. Therefore, the rotational speed of the rotor magnet 13 can be detected using this induced voltage.

When the printed circuit board 11 is positioned to be close to the rotor magnet 13, an output rotational speed detection signal of sufficient amplitude in practical use can be obtained even if the step between the convex and concave portions 13a and 13b is made small. In this case, the step between the convex portions and the concave portions 13a and 13b is very small relative to the substantial air gap length between the rotor magnet 13 and the stator yoke 6, including the thickness of the stator coil 5 and the thickeness of the printed circuit board 11. As a result, the reduction of main flux due to the provision of the convex and concave portions 13a and 13b used for the detection of rotational speed is negligibly small. As a result, torgue generation characteristic of the motor is hardly affected by the provision of the convex and concave portions 13a and 13b.

Now it will be described how an origin of rotation is detected in the above-described embodiment. As shown in Fig. 3, a radial slit or groove 14 is made at the center of one pole of the rotor magnet 13. The legth and width of the slit 14 are designated at the references L and W respectively. Turning back to Fig. 2 showing the printed circuit board 11, the shape of the above-mentioned slit 14 corresponds to the shape of the rectangular one-turn conductor pattern 11b having a length L and a width W.

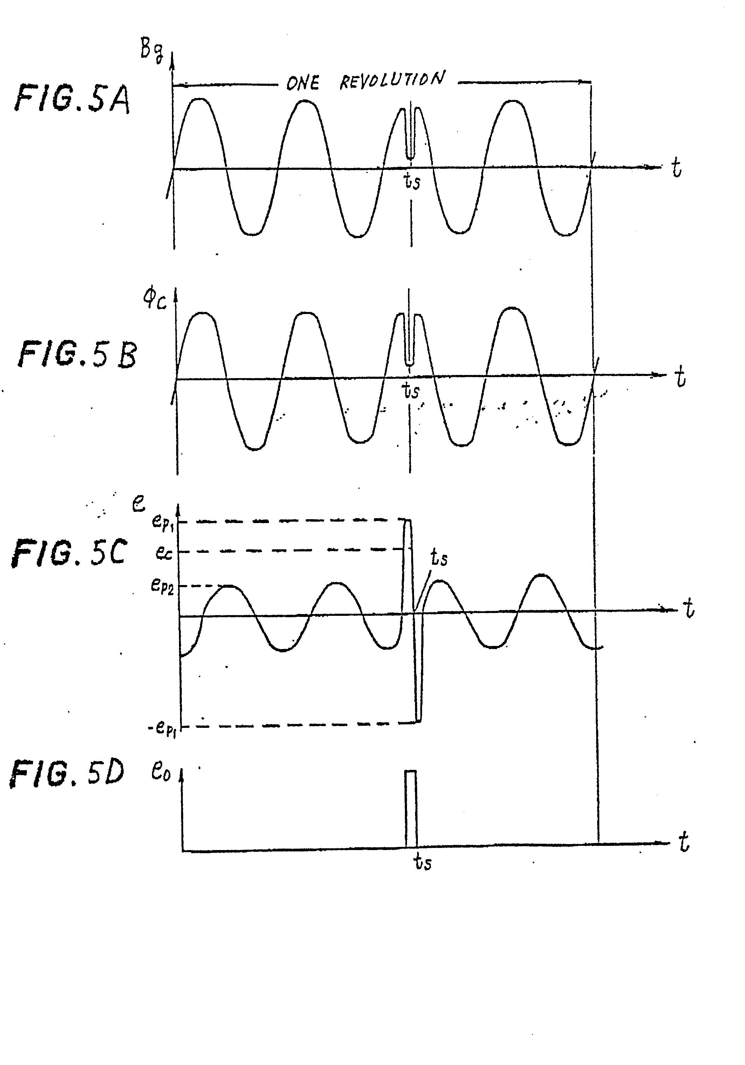

The detection of origin of rotation using the above-described structure will be described with reference to Figs. 5A to 5D. Fig. 5A shows the state of variation of the magnetic flux density Bg at a position of the conductor pattern 11a on the printed circuit board 11 when the rotor magnet 13 of Fig. 1 makes a full turn at a predetermined rotational speed. As shown in the waveform, the flux density Bg suddenly drops at time $t_s$ when the slit 14 made in the rotor magnet 13 comes to oppose the rectangular conductor pattern 11b on the printed circuit board 11. Fig. 5B shows the variation in magnetic flux $\phi_c$ interlinking the rectangular conductor pattern 11b, and the magnetic flux $\phi_c$ varies in the same manner as flux density $B_g$ of Fig. 5A when the width W of the rectangular conductor pattern 14 is relatively narrow when compared with the width of the magnet of the rotor magnet 13. Fig. 5C shows a waveform of the voltage e induced between terminals A and B of the rectangular conductor pattern 11b. Since the induced voltage e is given by $e = -d\phi_c/dt$, a pulse-like high voltage having positive and negative peaks $e_{p1}$ and $-e_{p1}$ occurs around time $t_s$ as shown. These peak values $e_{p1}$ and $-e_{p1}$ are greater than peak value $e_{p2}$ remote from time $t_s$. When the induced voltage waveform of Fig. 5C is inputted to a comparator having a threshold which assumes a lue between the above-mentioned peak values $e_{p1}$ and $e_{p2}$, the comparator outputs a pulse signal $e_o$ as shown in Fig. 5D. This pulse signal $e_o$ indicates the origin of rotation of the rotor magnet 13 and is produced each time the rotor magnet makes a full turn.

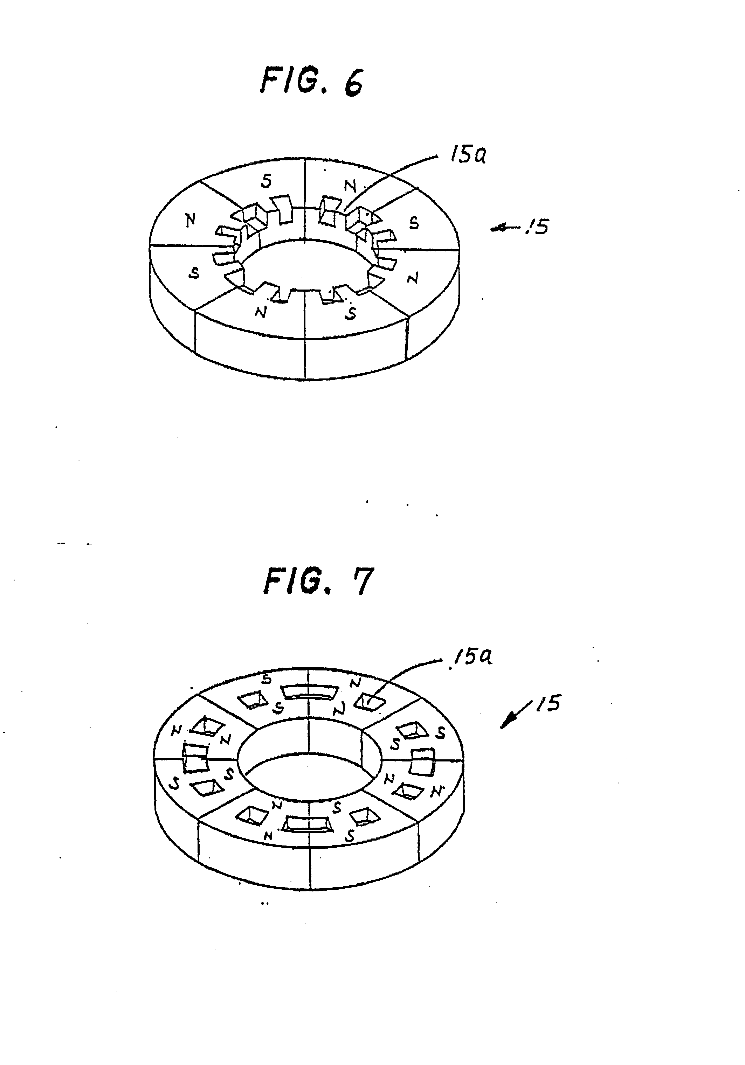

Figs. 6 and 7 show modifications of the above-described embodiment. More specifically, in Fig. 6 the convex and concave portions now designated at 15a are formed at the inner periphery of the rotor magnet now designated at 15. In the arrangement of Fig. 7, the convex and concave portions 15a are formed on one surface of the rotor magnet 15 at the middle between the outer and inner peripheries. When such rotor magnet 15 of Fig. 6 or 7 is used, the position of the conductor pattern 11a on the printed circuit board 11 should be changed to oppose the convex and concave portions 15a.

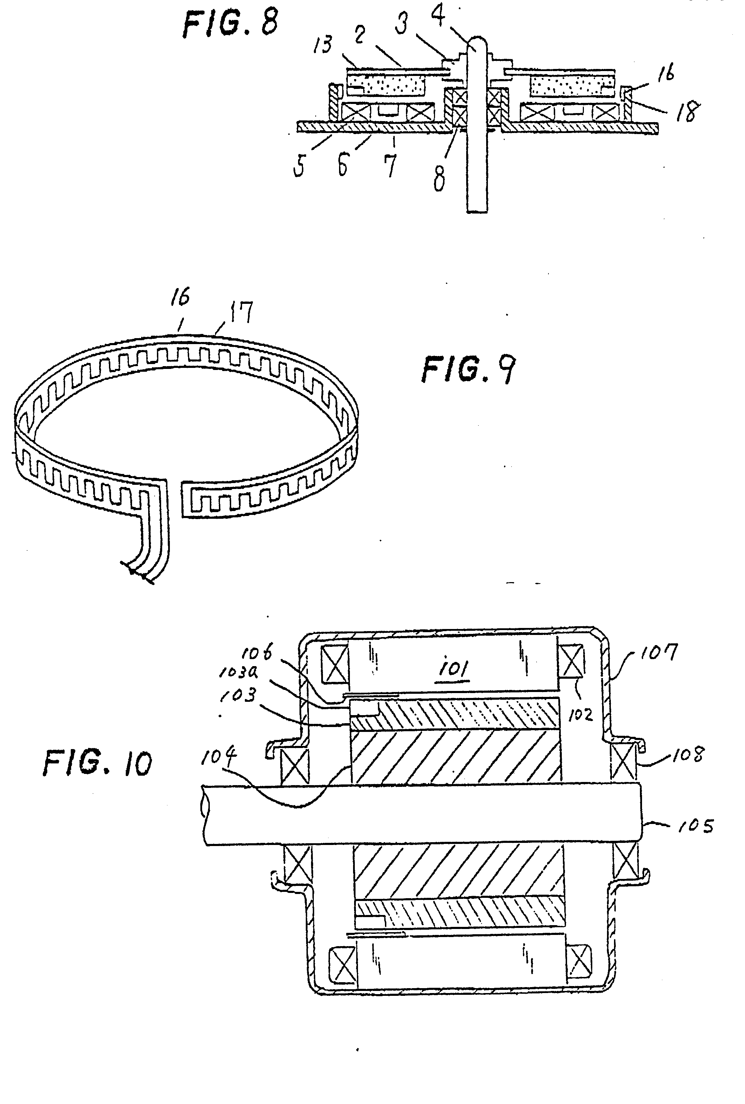

Reference is now made to Fig. 8 showing another embodiment of the present invention. In Fig. 8, the references 2 to 8 designate the same elements as those described in connection with the conventional arrangement. This embodiment differs from the previous embodiment in that a printed circuit board designated at the reference 16 used for detecting rotational speed has a different shape from that in Fig. 1. More specifically, the printed circuit board 16, which is originally elongate, is flexible to be curved to make a turn so that the printed circuit board 16 is now hollow cylindrical as shown in Fig. 9. The cylindrically curved printed circuit board 16 is secured to a fixing ring 18 which is fixed to the stator yoke 6. The rotor magnet 13 has convex and concave portions in the same manner as that shown in Fig. 3. More specifically, the convex and concave portions are formed at the outer periphery of the rotor magnet 13 over the entire circumference so as to face the inner surface of the hollow cylindrical printed circuit board 16. Each of the convex portions has the same width, i.e. circumferencial length, as that of the concave portion, and this width equals the width of the convex or concave portion of the conductor pattern 17 made in the cylindrical printed circuit board 16. Thus the length of one cycle in the convex and concave portions of the rotor magnet 13 is equal to that in the repetitive pattern of the conductor pattern 17.

The rotor magnet used in the previous embodiment is flat since the illustrated embodiment is directed to a flat motor. However, the present invention is not limited to such a flat motor, and therefore, the present invention may be applicable to electrical motors of radial gap type having a cylindrical rotor magnet rather than a flat rotor magnet.

Hence, reference is made to Fig. 10 showing a further embodiment of the invention having such a cylindrical rotor magnet. A stator coil 102 is wound around a stator 101, and a rotor magnet 103 is telescopically supported by a rotor yoke 104 fitted into the hollow cylindrical rotor magnet 103. The rotor yoke 104 is secured to a rotary shaft 105 supported by bearings 105. The reference 106 designates a cylindrically curved printed circuit board.

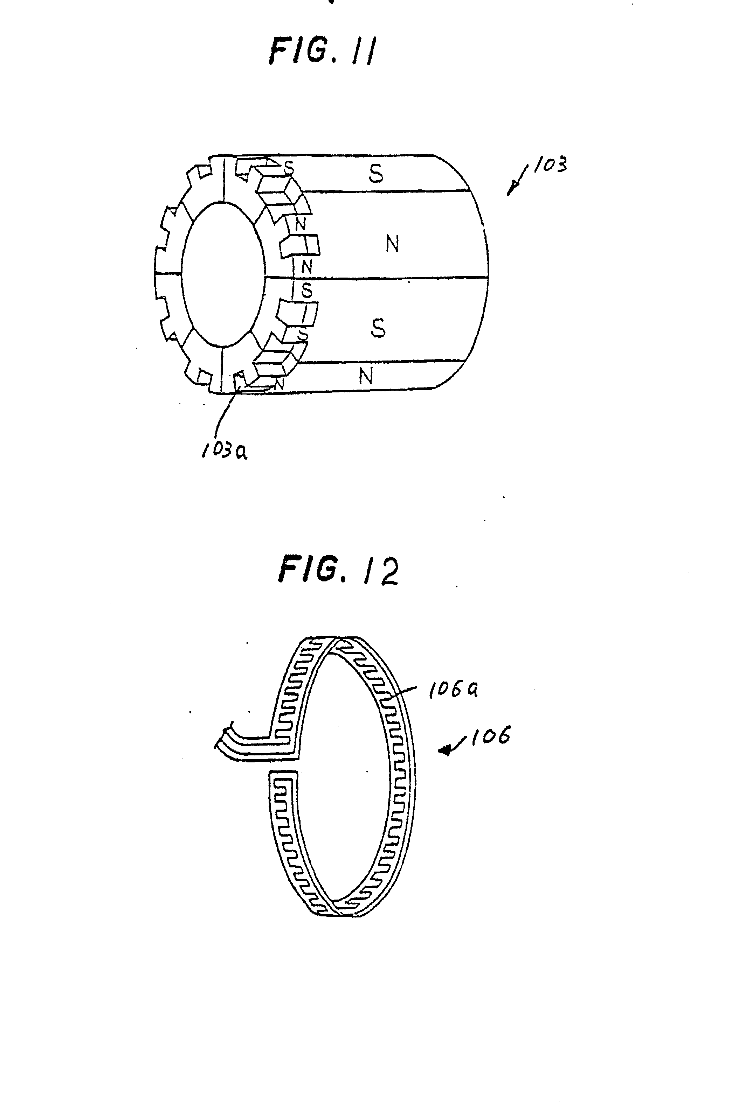

Figs. 11 and 12 respectively show the cylindrical rotor magnet 103 and the cylindrically curved printed circuit board 106. The rotor magnet 103 has convex and concave portions 103a at one end of outer periphery. The printed circuit board 106 has repetitive conductor pattern 106a in the same manner as in the embodiment of Figs. 8 and 9. As shown in Fig. 10, the cylindrically curved printed circuit board 106 is attached to the stator 101 to oppose the convex and concave portions 103a of the rotor magnet 103. The width of each of the convex and concave portions 103a is approximately 2 or 3 millimeters, and the phase of the convex and cocave arragement is shifted by half cycle in each N or S pole from adjacent S or N poles in the same manner as in the previous embodiments. The conductor pattern 106a on the printed circuit board 106 also has the same cycle length as that of the convex and concave portions 103a.

With the above structure therefore, a voltage having a frequency and amplitude proportional to the rotational speed is developed between terminals of the conductor pattern 106 in the same manner as in the above-described flat motors when the rotor magnet 106 rotates.

As described in the above, according to the present invention rotational speed detecting means having a wave-like conductor pattern is provided to oppose convex and concave portions made in a rotor magnet so as to produce an output signal indicative of the rotational speed of the rotor magnet. Since the rotor magnet just has such convex and concave portions without having additonally magnetized portions or separate magnet, reduction in torque is effectively prevented. Furthermore, the present invention provides smaller size and less cost.

Moreover, in an arrangement that a radial slit or groove is made in the rotor magnet and a coil pattern is provided to face the slit or groove where the length and width of the coil pattern are equal to those of the silt or groove, no additional parts are required as in the conventional arrangement for obtaining a single pulse per one revolution. As a result, the entire dimension of the motor can be reduced compared to conventional arrangements.

The above-described embodiments are just examples of the present invention, and therefore, it will be apparent for those skilled in the art that many modifications and variations may be made without departing from the scope of the present invention.

## CLAIMS

1. An electrical motor comprising:

(a) a rotor magnet rotatably supported and having a plurality of N and S poles alternately arranged circumferentially, each of said N and S poles having a plurality of convex and concave portions successively and alternately arranged, said convex and concave portions in each of said poles having a phase which is shifted by a half cycle in the circumferential direction from the phase of the convex and concave portions of adjacent poles;

(b) a stator coil secured to oppose said rotor magnet; and

(c) a wave-like conductor pattern secured so as to face said convex and concave portions of said rotor magnet, the length of one cycle in said wave-like conductor pattern being equal to the length of one cycle of said convex and concave portions.

2. An electrical motor as claimed in claim 1, wherein said rotor magnet is substantially flat.

3. An electrical motor as claimed in claim 1 or 2, wherein said convex and concave portions are formed at the outer periphery of said rotor magnet.

4. An electrical motor as claimed in claim 1 or 2, wherein said convex and concave portions are formed at the inner periphery of said rotor magnet.

5. An electrical motor as claimed in claim 1 or 2, wherein said convex and concave portions are formed at a portion between inner and outer peripheries of said rotor magnet.

6. An electrical motor as claimed in claim 2 or 3, wherein said convex and concave portions are formed on one surface of said rotor magnet.

7. An electrical motor as claimed in any one of claims 1 to 6, wherein said wave-like conductor pattern is formed on a flat printed circuit board.

8. An electrical motor as claimed in any one of claims 1 to 6, wherein said wave-like conductor pattern is formed on a flexible printed circuit board which is cylindrically curved so as to surround the outer periphery of said rotor magnet.

9. An electrical motor as claimed in claim 8, wherein said rotor magnet is generally cylindrical and said convex and concave portions are formed at one end on the outer periphery of said rotor magnet.

10. An electrical motor as claimed in any one of claims 1 to 9, further comprising a radial groove or slit made in said rotor magnet, and an additional conductor pattern arranged to oppose said groove or slit, said additional conductor pattern having a width and length which are substantially equal to those of said groove or slit.

11. An electrical motor as claimed in claim 10, wherein said rotor magnet is flat to have said groove or slit on its one surface.

12. An electrical motor as claimed in claim 11, wherein said groove or slit is longer than the radial length of each of said convex and concave portions.

13. An electrical motor as claimed in claim 11, wherein said rotor magnet is annular and said groove extends from inner periphery to outer periphery of said rotor magnet.

0200537

FIG. 1

13
2
3
4
13b
11
5
6
7
8

C D
A
B
11
L
11a
11b
W

FIG. 2

13
14
L
13b
13a

FIG. 3

FIG. 4A
CONCAVE PORTION
11a
CONVEX PORTION
C
D
ROTOR MAGNET
13
DIRECTION OF ROTATION
FIG. 4B
CONCAVE PORTION
11a
CONVEX PORTION
C
D
13
DIRECTION OF ROTATION

FIG.5A

Bg
ONE REVOLUTION
ts
t

FIG.5B

φc
ts
t

FIG.5C

e
ep1
ec
ep2
ts
t
-ep1

FIG.5D

e0
t
ts

FIG. 6

15a
15
S
N
N
S
S
N
N
S

FIG. 7

15a
15

FIG. 8
4
3
2
13
16
18
5
6
7
8

16
17
FIG. 9

FIG. 10
106
103a
103
101
102
107
108
104
105

FIG. 11

S
S
N
N
N
S
S
S
N
N
103
103a

FIG. 12

106a
106

FIG. 13
PRIOR ART

1
2
3
4
9
5
6
7
8

FIG. 14
PRIOR ART

B
A
B
S
N
N
S
S
N
N
S
1

FIG. 15
PRIOR ART

C D
10
10a
9

FIG. 16
PRIOR ART

360°/64
360°/64
+Φmax
-Φmax
ROTATIONAL ANGLE θ


FIG. 17
PRIOR ART

11
2
3
4
12
13
5
6
7
8